(19) Europäisches Patentamt
European Patent Office
Office européen des brevets

(11) **EP 0 578 959 B1**

(12) **EUROPÄISCHE PATENTSCHRIFT**

(45) Veröffentlichungstag und Bekanntmachung des Hinweises auf die Patenterteilung:
**15.01.1997 Patentblatt 1997/03**

(51) Int Cl.6: **H02G 1/08**, H02G 9/06, H02G 3/04

(21) Anmeldenummer: **93108919.7**

(22) Anmeldetag: **03.06.1993**

(54) **Kabelführungseinrichtung mit zumindest einem Kabelführungsrohr aus thermoplastischem Kunststoff**

Cable guiding device with at least one cable guiding pipe of thermoplastic synthetic material

Dispositif de guidage de câble avec au moins un tuyau de guidage de câble en matière synthétique thermoplastique

(84) Benannte Vertragsstaaten:
**AT BE CH DE DK ES FR GB GR IE IT LI LU NL PT SE**

(30) Priorität: **13.06.1992 DE 4219403**

(43) Veröffentlichungstag der Anmeldung:
**19.01.1994 Patentblatt 1994/03**

(73) Patentinhaber: **Dipl.-Ing. Dr. Ernst Vogelsang GmbH & Co. KG**
**D-45699 Herten (DE)**

(72) Erfinder: **Vogelsang, Horst**
**W-4352 Herten/Westf. (DE)**

(74) Vertreter: **Andrejewski, Walter, Dr. et al**
**Patentanwälte**
**Andrejewski, Honke & Partner**
**Postfach 10 02 54**
**45002 Essen (DE)**

(56) Entgegenhaltungen:
EP-A- 0 414 514          EP-A- 0 458 012
DE-A- 3 529 541          DE-A- 4 031 783

**Beschreibung**

Die Erfindung betrifft eine Kabelführungseinrichtung mit zumindest einem Kabelführungsrohr aus thermoplastischem Kunststoff, welches einen Kabelführungskanal mit einer im Querschnitt kreisrunden Kanalinnenwand mit dem Rohrinnenradius r und auf der Kanalinnenwand angeordnete, aus dem thermoplastischen Kunststoff des Kunststoffrohres ausgeformte Gleitrippen aufweist, die, bezogen auf den Innenumfang, mit einem vorgegebenen Drehwinkel a verlaufen, wobei sich in einem geradlinig angeordneten Kabelführungsrohr mit einem einzuführenden Kabel an den Kontaktstellen zwischen den Gleitrippen und dem Kabelmantel des einzuführenden Kabels Kontaktflächen der Rippenkontaktbreite b ergeben. Solche Kabelführungseinrichtungen werden üblicherweise im Boden verlegt. Die Kabel werden nachträglich in das Kabelführungsrohr bzw. die Kabelführungsrohre eingeführt. - Kabel bezeichnet im Rahmen der Erfindung die zur Nachrichtenübermittlung, insbesondere im Postbereich, üblichen Kabel, Energieversorgungskabel u. dgl.. In ein Kabelführungsrohr der Kabelführungseinrichtung können die einzelnen Kabel, aber auch deren mehrere oder Kabelbündel, eingeführt werden. Die einzelnen Kabel sind einadrig oder mehradrig und besitzen einen Kabelmantel, der aus Gummi oder Kunststoff besteht. Die Gleitrippen besitzen eine Rippenhöhe von mehr als 0,1 mm, vorzugsweise von 0,3 bis 3 mm. Zwischen den Gleitrippen sind Rillen angeordnet. Zum Ausdruck Drehwinkel wird auf die Theorie der Schraubenlinien verwiesen (vgl. Hütte "Des Ingenieurs Taschenbuch" I, Theoretische Grundlagen, 28. Auflage, Ernst & Sohn Berlin, Seite 157). Eine Schraubenlinie ist danach wie folgt definiert: Wenn eine Gerade sich so bewegt, daß sie eine feste Achse stets senkrecht schneidet und die Strecken, um die der auf der Geraden feste Schnittpunkt auf der Achse fortrückt, proportional den Winkeln sind, um die sich die Gerade dreht, so beschreibt jeder ihrer Punkte eine gewöhnliche Schraubenlinie. Die vorstehend genannten Winkel gegenüber der Anfangsrichtung der Geraden sind die Drehwinkel. Das Maß bezieht sich auf einen bestimmten Längenabschnitt der Achse. Im übrigen verlaufen die Gleitrippen in bezug auf die Kanalinnenwand mit einer vorgegebenen Steigung. Der Tangens des Steigungswinkels an einem Punkt einer Gleitrippe ist die erste Ableitung der mathematischen Gleichung für die Schraubenlinie, die der Gleitrippe entspricht, an diesem Punkt. Übliche Kabeldurchmesser liegen im Bereich von 10 bis 90 mm, sie betragen z. B. 10, 28, 35 oder 90 mm. Übliche Kabelführungsrohre einer erfindungsgemäßen Kabelführungseinrichtung, besitzen einen Innendurchmesser im Bereich von 26 bis 200 mm.

Der Begriff Kabelführungseinrichtung bezeichnet z. B. einzelne Kabelführungsrohre (vgl. DE 35 29 541 A1), aber auch Kabelführungsrohraggregate (vgl. DE 32 17 401 A1). Das Kabelführungsrohr bzw. die Kabelführungsrohre der Kabelführungseinrichtung nehmen einzelne Kabel oder Kabelbündel auf, die schiebend oder ziehend eingeführt werden müssen. Bei einer bekannten Kabelführungseinrichtung (DE 35 29 541 A1) besitzen die Gleitrippen, bezogen auf die Kabelführungskanalachse und in Richtung der Kabelführungskanalachse, eine konstante Richtung. Sie verlaufen beispielsweise schraubenwendelförmig sowie über die gesamte Länge der Kabelführungseinrichtung linksdrehend oder rechtsdrehend mit gleichem Drehwinkel. Der Reibungswiderstand, den ein Kabel oder ein Kabelbündel beim Einführen in eine solche Kabelführungseinrichtung erfährt, wird durch diese Gleitrippen beachtlich reduziert. Das hat sich für viele Anwendungsfälle bewährt und erleichtert das Einziehen und Einschieben der Kabel bzw. Kabelbündel. Für beide Maßnahmen wird im Rahmen der Erfindung der Ausdruck Einziehen verwandt. Es kann, je nach der Gestaltung des Kabels oder des Kabelbündels, vorkommen, daß aus der Wechselwirkung eines Kabels und eines Kabelbündels mit den Gleitrippen störende Einflüsse entstehen, nämlich tordierende Kräfte auf das Kabel bzw. das Kabelbündel einwirken und eine störende und erheblich bremsende Tordierung des Kabels oder des Kabelbündels bewirken. Dabei kann das Kabel oder das Kabelbündel an den Gleitrippen gleichsam hochklettern. Diese störenden Einflüsse lassen sich reduzieren, wenn man, wie es ebenfalls bekannt ist, die Gleitrippen, bezogen auf die Kabelführungskanalachse und in Richtung der Kabelführungskanalachse, mit alternierender Richtung anordnet (DE 40 31 783 A1). Alternierende Richtung bedeutet, daß der Drehsinn der Gleitrippen unterschiedlich ist, z. B. einmal von links nach rechts, einmal von rechts nach links. Anders ausgedrückt ist der Drehwinkel einmal positiv, einmal negativ. Dabei können die Gleitrippen außerdem eine in Richtung der Kabelführungskanalachse abschnittsweise unterschiedliche Steigung aufweisen. Überraschenderweise werden bei dieser Gestaltung und Ausbildung der Kabelführungseinrichtung störende tordierende Kräfte auf ein einzuziehendes oder einzuschiebendes Kabel bzw. auf ein einzuziehendes oder einzuschiebendes Kabelbündel nicht mehr ausgeübt. Die aus der Reibungswechselwirkung eines Kabels bzw. eines Kabelbündels mit den Gleitrippen resultierenden Kräfte lassen störende Tordierungen des Kabels bzw. des Kabelbündels nicht mehr aufkommen und heben sich, je nach Gestaltung, vollständig auf. Nichtsdestoweniger müssen beim Einziehen eines Kabels oder eines Kabelbündels in den Kabelführungskanal nicht unbeachtliche lineare Einziehkräfte aufgebracht werden, mit denen der gleichsam lineare Reibungswiderstand in Längsrichtung des Kabelführungskanales überwunden wird. Entsprechende Einrichtungen müssen bereitgestellt werden. Das alles gilt auch dann, wenn bei dieser bekannten Ausführungsform in einem Spezialfall, ohne besondere Führung und Gestaltung, die Gleitrippen schlangenlinienförmig verlaufen (DE 40 31 783 Al, Fig. 1, 4 und 5).

Der Erfindung liegt die Aufgabe zugrunde, eine Kabelführungseinrichtung des eingangs beschriebenen Aufbaus so einzurichten, daß die Einziehkräfte unter allen Einziehbetriebsbedingungen und auch dann, wenn die Kabel führungseinrichtung im Bogen verlegt ist, extrem klein sind.

Zur Lösung dieser Aufgabe lehrt die Erfindung die Kombination der folgenden Merkmale:

1) Die Gleitrippen verlaufen wellenförmig und bilden zwischen Abschnitten mit konstantem Drehwinkel Umkehrbereiche,

2) die Rippenkontaktbreite b, die Anzahl z der äquidistant über den Umfang der Kanalinnenwand verteilten Gleitrippen, der Rohrinnenradius r und eine als $L_K$ bezeichnete Länge der Rippenkontaktabschnitte zwischen den Umkehrbereichen genügen der Gleichung

$$Ar = 0{,}16\ b^2 z\ L_K,$$

wobei A die Kontaktfläche des Kabelmantels an den Schnittpunkten mit den Gleitrippen in den Rippenkontaktabschnitten definiert und zahlenmäßig im Bereich von 4,5 bis 32 mm² liegt,

3) der im Bogenmaß gemessene Winkel g der Steigung der Gleitrippen, gemessen an der Kanalinnenwand, genügt der Gleichung

$$g = ra / L_K$$

und liegt zahlenmäßig im Bereich von 0,001 bis 1,2 rad,

wobei r im Bereich von 12 bis 100 mm und $L_K$ im Bereich von 500 bis 10.000 mm gewählt sind sowie die einzuführenden Kabel einen Außenradius im Bereich von 5 bis 45 mm aufweisen. Das vorgegebene Maß des Drehwinkels bezieht sich dabei auf den Längenabschnitt der Achse des Kabelkanals zwischen den Umkehrbereichen.

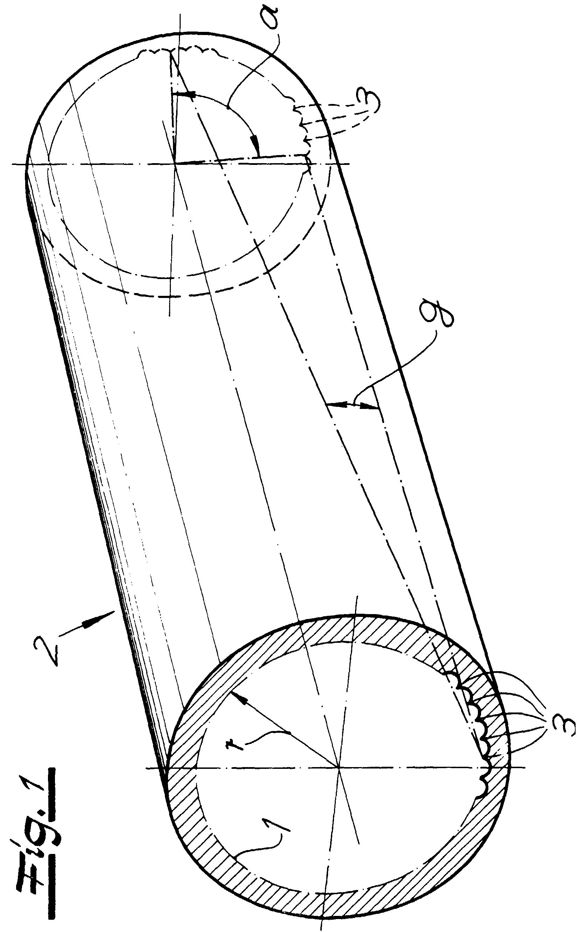

Die Umkehrbereiche sind bei Gleitrippen, die in einer Abwicklung der Kanalinnenwand in die Ebene sinusförmig verlaufen, die höchsten Punkte der Wellenberge bzw. die tiefsten Punkte der Wellentäler der Sinuskurven. Die Umkehrbereiche werden dann zu einem Umkehrpunkt. Das Merkmal 1) in der Ausführungsform mit zu Umkehrpunkten geschrumpften Umkehrbereichen ist, wie einleitend beschrieben, an sich bekannt. Es können jedoch im Bereich der Wellenberge bzw. der Wellentäler auch in Richtung von Mantellinien der Kanalinnenwand verlaufende Gleitrippenabschnitte zwischengeschaltet sein, die verhältnismäßig lange Umkehrbereiche definieren. Die Kontaktflächen des Kabelmantels mit den einzelnen Gleitrippen besitzen in der Draufsicht eine mehr oder weniger rhomboidförmige Gestalt, deren Geometrie durch die Rippenkontaktbreite, d. h. die Breite der Gleitrippen am Berührungspunkt am Kabelmantel, und durch den Verlauf der Gleitrippen bestimmt ist. Zur weiteren Erläuterung der in der vorstehend behandelten Lehre zum technischen Handeln erscheinenden Begriffe wird auf die Fig. 1 und deren Beschreibung verwiesen.

Die Erfindung geht von der Erkenntnis aus, daß bei den vorstehend definierten und bemaßten Kabelführungsrohren und Kabeln eine beachtliche Reduzierung der Einziehkräfte erreichbar ist, wenn Vorsorge getroffen ist, daß beim Auftreten störend großer Einziehkräfte im Zusammenhang mit den durchzuführenden Einzieharbeiten die trockene Reibung durch eine Reibung ersetzt werden kann, die der Schmiermittelreibung nahe kommt, die bekanntlich wesentlich kleinere Reibungskoeffizienten aufweist als die trockene Reibung. Dazu wird jedoch erfindungsgemäß nicht ein besonderes Schmiermittel eingebracht. Es werden vielmehr nach dem zur Erfindung gehörenden Verfahren zum Einziehen der Kabel vorzugsweise die Einziehgeschwindigkeit und/oder die Einstoßgeschwindigkeit des einzuführenden Kabels oder Kabelbündels so gewählt, daß die Kontaktflächen eine Temperaturerhöhung erfahren, was überraschenderweise den Reibungswiderstand reduziert. Vorzugsweise wird so gearbeitet, daß die Kontaktflächen durch Reibungswärme angeschmolzen werden und durch den Schmelzfluß ein Zustand echter Schmiermittelreibung eingestellt wird. Diese Möglichkeit ist bisher übersehen worden. Der Gleitrippenquerschnitt ist dabei innerhalb der vorstehend angegebenen Grenzen weitgehend beliebig. Erfindungsgemäß sind die angegebenen zahlenmäßigen Parameter so eingerichtet, daß der Zustand der Schmiermittelreibung stets und unschwer erreicht werden kann, wenn die Kabelführungseinrichtung aus den für solche Gegenstände üblichen thermoplastischen Kunststoffen hergestellt wird und wenn die Kabel die üblichen Kabelmäntel und auch das übliche Gewicht pro Längeneinheit aufweisen. Wenn auch erfindungsgemäß diese Möglichkeit besteht, so liegt es dennoch im Rahmen der Erfindung, in den rinnenförmigen Vertiefungen zwischen den Gleitrippen Schmiermittel anzuordnen. Erforderlich ist dieses jedoch nicht. Auch können die Kabelmäntel eine Beschichtung aufweisen, die als Gleitmittel wirkt. Es versteht sich, daß bei einer erfindungsgemäßen Kabelführungseinrichtung die Einziehkräfte in bezug auf die absolute Größe proportional zur Länge der Kabelführungseinrichtung zunehmen. Das gilt auch dann, wenn nach dem beschriebenen Verfahren eine Schmiermittelreibung durch Anschmelzen der Gleitrippen, oder genauer der Gleitrippenkämme, eingerichtet wird. Im Rahmen der Erfindung liegt es auch, so langsam und vorsichtig einzuziehen, daß die Erzeugung einer Schmiermittelreibung nicht erforderlich ist und sich auch nicht einstellt.

Wenn auch der Gleitrippenquerschnitt weitgehend beliebig ist, so ist doch eine Ausführungsform ausgezeichnet, bei der die Kabelkanalinnenwand zwischen benachbarten Gleitrippen eine zum Kabelkanal konkave Rinnenform aufweist, die beidseits in den Kamm der Gleitrippen einläuft.

Verwirklicht man die Lehre der Erfindung, so ergeben sich für Kabelführungseinrichtungen mit Kabelführungsrohren üblicher Durchmesser eine Mehrzahl von Gestaltungen, denen besondere Bedeutung zukommt. Sie sind in der folgenden Tabelle aufgeführt:

| Gestaltungsparameter | Kabelführungsrohrbezeichnung φ Außen | | | |
| --- | --- | --- | --- | --- |
| | <u>32</u>(x3,0) | <u>50</u>(x4,6) | <u>110</u>(x6,3) | <u>225</u>(x12,8) |
| Außendurchmesser in mm | 32,0 | 50,0 | 110,0 | 225,0 |
| Wandstärke in mm | 3,0 | 4,6 | 6,3 | 12,8 |
| Innendurchmesser in mm | 26,0 | 40,8 | 97,4 | 199,4 |
| Gleitrippenzahl | 26 | 40 | 40 | 82 |
| Gleitrippenabstand in mm | 3,14 | 3,20 | 7,65 | 7,65 |
| Drehwinkel in ° | 180 | 180 | 180 | 180 |
| Rippenkontaktbreite in mm | 0,1 | 0,1 | 0,1 | 0,1 |
| Länge der Rippenkontaktabschnitte in mm | 1275 | 2000 | 4775 | 9775 |
| Länge der Verbindungsabschnitte in mm | 2 | 2 | 2 | 2 |

Im einzelnen bestehen mehrere Möglichkeiten zur weiteren Ausbildung und Gestaltung erfindungsgemäßer Kabelführungseinrichtungen. So soll regelmäßig der Drehwinkel im Bereich zwischen 45° bis 340°, vorzugsweise bei etwa 180°, liegen. Zu einer Optimierung kommt man bei vielen Anwendungen dadurch, daß die Maßnahmen des Patentanspruches 4 verwirklicht werden. Befinden sich zwischen zwei Abschnitten mit konstantem Drehwinkel bei einem Kabelführungsrohr einer erfindungsgemäßen Kabelführungseinrichtung Verbindungsabschnitte, so kommt man zu besonders günstigen Ergebnissen in bezug auf die Einziehkräfte durch Verwirklichung der Merkmale des Patentanspruches 5.

Im folgenden wird die Erfindung anhand einer lediglich ein Ausführungsbeispiel darstellenden Zeichnung ausführlicher erläutert. Es zeigen

Fig. 1    schematisch eine perspektivische Darstellung einer im Querschnitt kreisförmigen Kanalinnenwand eines Kabelführungsrohres mit einigen zu den Merkmalen der Erfindung gehörenden geometrischen Symbolen,

Fig. 2    eine graphische Darstellung zur Erläuterung des Begriffes Kontaktfläche,

Fig. 3    eine Abwicklung der Kanalinnenwand mit erfindungsgemäßen Gleitrippen und angedeutetem Kabel,

Fig. 4    in starker Vergrößerung einen Längsschnitt durch ein erfindungsgemäßes Kabelführungsrohr mit Kabel, ausschnittsweise, und

Fig. 5    in starker Vergrößerung einen Querschnitt durch ein erfindungsgemäßes Kabelführungsrohr, ausschnittsweise.

Die in der Fig. 1 dargestellte, im Querschnitt kreisförmige Kabelkanalinnenwand 1 gehört einem Kabelführungsrohr 2 an, welches seinerseits Bestandteil einer erfindungsgemäßen Kabelführungseinrichtung ist. Man erkennt den Rohrinnenradius r. Man erkennt auf der Kanalinnenwand 1 angeordnete, hauptsächlich durch bloße Linien dargestellte Gleitrippen 3, die, bezogen auf den Innenumfang, mit einem vorgegebenen Drehwinkel a verlaufen.

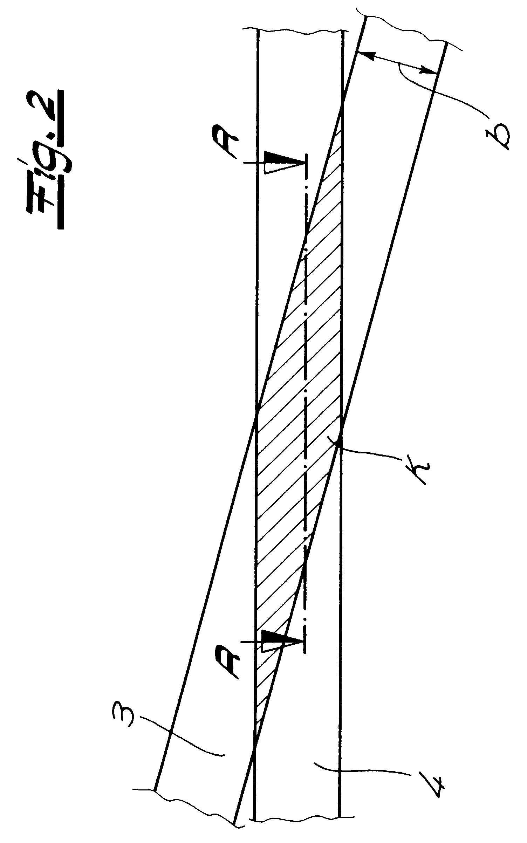

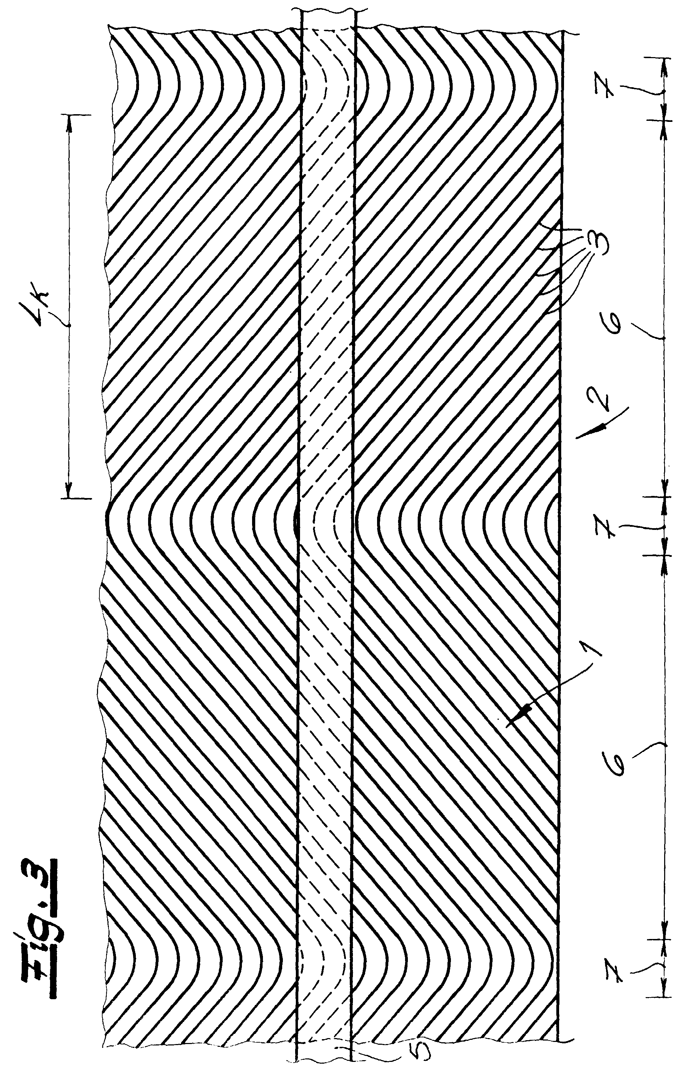

In der Fig. 2 ist schematisch und in die Ebene abgewickelt eine Draufsicht auf eine Gleitrippe 3 dargestellt, auf der ein streifenförmiger Bereich 4 des Kabelmantels eines eingezogenen Kabels aufliegt. In der Fig. 3 erkennt man einen Ausschnitt aus einer Abwicklung der Kanalinnenwand 1 und, aufliegend, ein eingezogenes Kabel 5, dessen Kabelmantel der Bereich 4 angehört. Aus den Fig. 2 und 3 entnimmt man, daß sich in einem geradlinig angeordneten Kabelführungsrohr 2 mit einem eingeführten Kabel 5 an den Kontaktstellen zwischen den Gleitrippen 3 und den Bereichen 4 des Kabelmantels des einzuführenden Kabels 5 rhomboidförmige Kontaktflächen K der Rippenkontaktbreite b ergeben. Insbesondere aus der Fig. 3 entnimmt man auch, daß die Gleitrippen 3 wellenförmig geführt sind. Sie bilden zwischen Abschnitten 6 mit konstantem Drehwinkel a Umkehrbereiche 7. Die Rippenkontaktbreite b, die Anzahl z der äquidistant über den Umfang der Kanalinnenwand 1 verteilten Gleitrippen 3, der Rohrinnenradius r und die Länge $L_K$

der Rippenkontaktabschnitte zwischen den Umkehrbereichen 7 genügen der Gleichung, die im Patentanspruch 1 angegeben ist. In der Fig. 3 entspricht die Länge der Abschnitte 6 der Länge $L_K$. Der im Bogenmaß gemessene Winkel g der Steigung der Gleitrippen 3, gemessen an der Kanalinnenwand 1, der in Fig. 1 angedeutet wurde, genügt ebenfalls der Gleichung, die im Patentanspruch 1 angegeben wurde. Die angegebenen Verhältnisse sind zutreffend und durch umfangreiche Experimente erprobt, wenn r im Bereich von 12 bis 100 mm liegt, wenn $L_K$ im Bereich von 500 bis 10.000 mm gewählt ist und wenn die einzuführenden Kabel 5 einen Außenradius im Bereich von 5 bis 45 mm aufweisen. Der Drehwinkel a mag im Ausführungsbeispiel und vorzugsweise bei etwa 180° liegen.

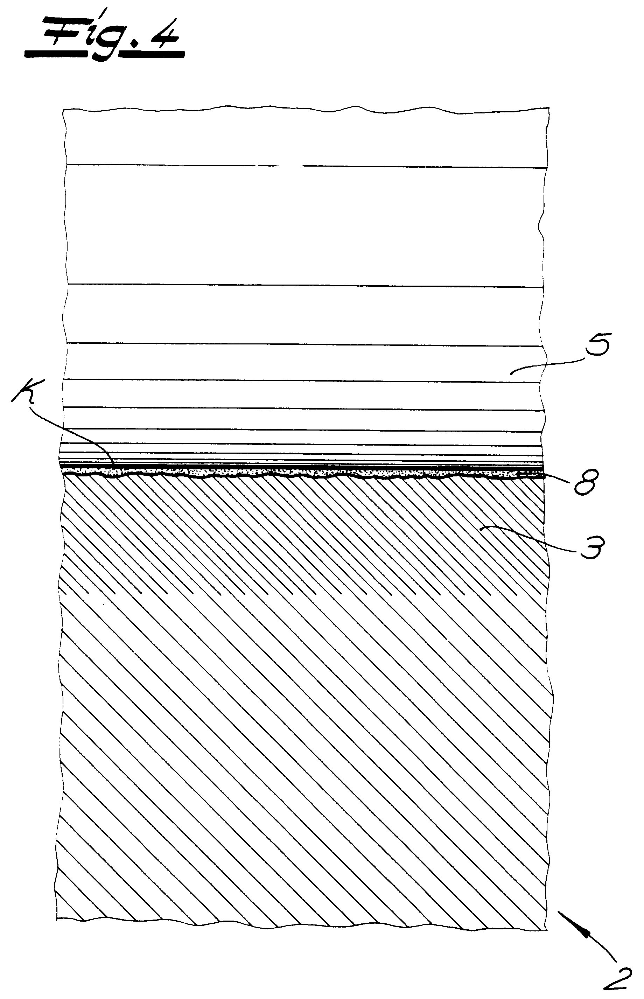

In der Fig. 4 erkennt man einen vergrößerten Ausschnitt aus einem Längsschnitt etwa in Richtung A-A der Fig. 2 mit auf einer geschnittenen Gleitrippe 3 im Bereich einer Kontaktfläche K aufliegendem Kabel 5. Durch Punktschraffur wurde angedeutet, daß die Gleitrippe 3 angeschmolzen wurde, und zwar durch die Reibungswärme, die beim Einziehen des Kabels 5 erzeugt wurde. Der Schmelzfluß wurde mit dem Bezugszeichen 8 versehen. Die Fig. 4 soll verdeutlichen, daß durch den Schmelzfluß 8 ein Zustand der Schmiermittelreibung eingestellt wird.

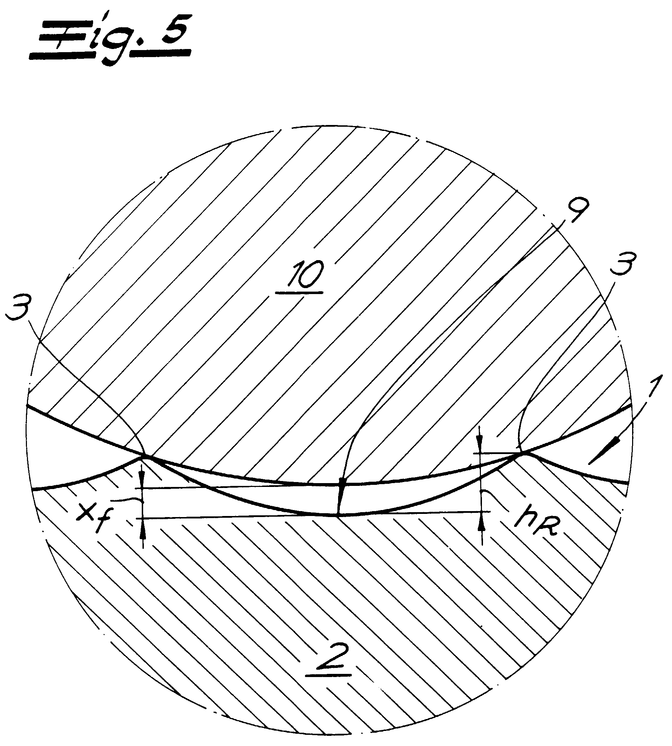

In der Fig. 5 erkennt man, daß die Kabelkanalinnenwand 1 zwischen benachbarten Gleitrippen 3 eine zum Kabelkanal konkave Rinnenform 9 aufweist, die beidseits in den Kamm der Gleitrippen 3 einläuft. Die dargestellten Maße sind für viele Anwendungsfälle typisch. Die Rippenhöhe $h_R$ ist etwa doppelt so groß wie der freie Abstand $x_f$ des Kabelmantels 10 vom Grund der Rinnenform 9 zwischen den Gleitrippen 3.

**Patentansprüche**

1. Kabelführungseinrichtung mit zumindest einem Kabelführungsrohr aus thermoplastischem Kunststoff, welches einen Kabelführungskanal mit einer im Querschnitt kreisrunden Kanalinnenwand mit dem Rohrinnenradius r und auf der Kanalinnenwand angeordnete, aus dem thermoplastischen Kunststoff des Kunststoffrohres ausgeformte Gleitrippen aufweist, die, bezogen auf den Innenumfang, mit einem vorgegebenen Drehwinkel a verlaufen, wobei sich in einem geradlinig angeordneten Kabelführungsrohr mit einem einzuführenden Kabel an den Kontaktstellen zwischen den Gleitrippen und dem Kabelmantel des einzuführenden Kabels Kontaktflächen der Rippenkontaktbreite b ergeben, wobei die Kombination der folgenden Merkmale verwirklicht ist:

   1) Die Gleitrippen verlaufen wellenförmig und bilden zwischen Abschnitten mit konstantem Drehwinkel Umkehrbereiche,

   2) die Rippenkontaktbreite b, die Anzahl z der äquidistant über den Umfang der Kanalinnenwand verteilten Gleitrippen, der Rohrinnenradius r und eine als $L_K$ bezeichnete Länge der Rippenkontaktabschnitte zwischen den Umkehrbereichen genügen der Gleichung

   $$A r = 0{,}16 \, b^2 z \, L_K,$$

   wobei A die Kontaktfläche des Kabelmantels an den Schnittpunkten mit den Gleitrippen in den Rippenkontaktabschnitten definiert und zahlenmäßig im Bereich von 4,5 bis 32 mm$^2$ liegt,

   3) der im Bogenmaß gemessene Winkel g der Steigung der Gleitrippen, gemessen an der Kanalinnenwand, genügt der Gleichung

   $$g = ra / L_K$$

   und liegt zahlenmäßig im Bereich von 0,001 bis 1,2 rad,

   wobei r im Bereich von 12 bis 100 mm und $L_K$ im Bereich von 500 bis 10.000 mm gewählt sind sowie die einzuführenden Kabel einen Außenradius im Bereich von 5 bis 45 mm aufweisen.

2. Kabelführungseinrichtung nach Anspruch 1, wobei die Kabelkanalinnenwand zwischen benachbarten Gleitrippen eine zum Kabelkanal konkave Rinnenform aufweist, die beidseits in den Kamm der Gleitrippen einläuft.

3. Kabelführungseinrichtung nach einem der Ansprüche 1 oder 2, wobei der Drehwinkel a im Bereich zwischen 45° und 340°, vorzugsweise bei etwa 180°, gewählt ist.

**4.** Kabelführungseinrichtung nach einem der Ansprüche 1 bis 3 wobei die Rippenkontaktbreite b, die Anzahl z der äquidistant über den Umfang der Kanalinnenwand verteilten Gleitrippen, der Rohrinnenradius r, der Drehwinkel a und die Länge $L_K$ der Rippenkontaktabschnitte zwischen den Umkehrbereichen der Gleichung

$$Ar = 0{,}16\ b^2 z\ (0{,}0003\ r^2 a^2 + L_K{}^2)^{1/2}$$

genügen.

**5.** Kabelführungseinrichtung nach einem der Ansprüche 1 bis 4, wobei zwischen zwei Abschnitten mit konstantem Drehwinkel Verbindungsabschnitte der Länge $L_V$ angeordnet sind, in denen sich die Gleitrippen parallel zur Rohrachse fortsetzen und daß die Rippenkontaktbreite b, die Anzahl z der äquidistant über den Umfang der Kanalinnenwand verteilten Gleitrippen, der Rohrinnenradius r, der Drehwinkel a, die Länge $L_K$ der Rippenkontaktabschnitte zwischen den Umkehrbereichen sowie die Länge $L_V$ der Verbindungsabschnitte der Gleichung

$$Ar = 0{,}16\ b^2 z\ (0{,}0003\ r^2 a^2 + L_K{}^2)^{1/2} + 4L_V br$$

genügen.

**6.** Verfahren zum Einziehen von Kabeln in Kabelführungsrohre nach einem der Ansprüche 1 bis 5 wobei die Einziehgeschwindigkeit des einzuführenden Kabels so gewählt wird, daß die Kontaktflächen durch Reibungswärme angeschmolzen werden und durch den Schmelzfluß ein Zustand der Schmiermittelreibung eingestellt wird.

## Claims

**1.** A cable routing device having at least one cable conduit which is made of synthetic thermoplastic material and which comprises a cable routing duct having a duct inner wall which is circular in cross-section and which has the conduit internal radius r and having sliding ribs disposed on the duct inner wall which are integrally formed from the synthetic thermoplastic material of the synthetic material conduit and which run at a predetermined angle of rotation a with respect to the internal circumference, wherein, in a cable conduit which is disposed in a straight line with a cable to be introduced, contact areas of the rib contact width b are formed between the sliding ribs and the cable sheath of the cable to be introduced, wherein the combination of the following features is put into effect:

1) the sliding ribs run in the form of waves and form reversal regions between sections with a constant angle of rotation,

2) the rib contact width b, the number z of sliding ribs distributed equidistantly over the circumference of the duct inner wall, the conduit internal radius r, and a length, which is denoted as $L_K$, of the rib contact sections between the reversal regions satisfy the equation

$$Ar = 0.16\ b^2 z L_K,$$

where A defines the contact area of the cable sheath on the points of intersection with the sliding ribs in the rib contact sections, and falls numerically within the range from 4.5 to 32 mm$^2$,

3) the angle g, measured in radians, of the gradient of the sliding ribs measured at the duct inner wall satisfies the equation

$$g = ra\ /\ L_K$$

and falls numerically within the range from 0.001 to 1.2 radians,

wherein r is selected within the range from 12 to 100 mm and $L_K$ is selected within the range from 500 to 10,000 mm, and wherein the cables to be introduced have an external radius within the range from 5 to 45 mm.

2. A cable routing device according to claim 1, wherein the cable duct inner wall between adjacent sliding ribs has the form of a channel which is concave towards the cable duct and which extends on both sides into the ridge of the sliding ribs.

3. A cable routing device according to either one of claims 1 or 2, wherein the angle of rotation a is selected within the range between 45° and 340°, and is preferably about 180°.

4. A cable routing device according to any one of claims 1 to 3, wherein the rib contact width b, the number z of the sliding ribs equidistantly distributed over the circumference of the duct inner wall, the conduit internal radius r, the angle of rotation a and the length $L_K$ of the rib contact sections between the reversal regions satisfy the equation

$$Ar = 0.16\ b^2 z\ (0.0003\ r^2 a^2 + L_K{}^2)^{1/2}.$$

5. A cable routing device according to any one of claims 1 to 4, wherein connecting sections of length $L_V$ are disposed between two sections with a constant angle of rotation, in which connecting sections the sliding ribs continue parallel to the conduit axis, and that the rib contact width b, the number z of the sliding ribs equidistantly distributed over the circumference of the duct inner wall, the conduit internal radius r, the angle of rotation a, the length $L_K$ of the rib contact sections between the reversal regions and the length $L_V$ of the connecting sections satisfy the equation

$$Ar = 0.16\ b^2 z\ (0.0003\ r^2 a^2 + L_K{}^2)^{1/2} + 4L_V br.$$

6. A method of pulling cables into cable conduits according to any one of claims 1 to 5, wherein the rate of pull-in of the cable to be introduced is selected so that the contact areas are melted due to frictional heat and a lubricant friction situation is produced due to the flow of melt.

## Revendications

1. Dispositif guide-câbles, comprenant au moins un tube de câbles en matière thermoplastique qui comporte un conduit de câbles avec une paroi intérieure de conduit de section circulaire avec rayon intérieur r du tube, et des nervures de glissement disposées sur la paroi intérieure du conduit et dégagées de la matière thermoplastique du tube en matière plastique, qui, rapporté à la circonférence intérieure, s'étendent avec un angle d'orientation a prédéterminé, un tube de câbles rectiligne formant avec un câble à introduire aux points de contact entre les nervures de glissement et la gaine de câble, des surfaces de contact avec la largeur de contact des nervures b, dans lequel la combinaison des particularités suivantes est mise en oeuvre :

  1) Les nervures de glissement sont ondulées et forment entre des sections avec un angle d'orientation constant, des zones d'inversion,
  2) la largeur de contact des nervures b, le nombre z des nervures de glissement réparties régulièrement sur la circonférence de la paroi intérieure du conduit, le rayon intérieur r du tube et une longueur des sections de contact de nervure désignée par LK entre les sections d'inversion satisfont à l'équation

$$Ar = 0,16\ b^2 z\ L_K,$$

  A définissant la surface de contact de la gaine de câble aux points d'intersection avec les nervures de glissement dans les sections de contact de nervure et se situant numériquement dans la plage de 4,5 à 32 mm², 
  3) l'angle g mesuré en radians de la pente des nervures de glissement, mesuré sur la paroi intérieure du conduit, satisfait à l'équation

$$g = ra/L_K$$

  et se situe numériquement dans la plage de 0,001 à 1,2 rad,

r étant de l'ordre de 12 à 100 mm et $L_K$ étant choisi dans la plage de 500 à 10.000 mm, et les câbles à introduire présentant un rayon extérieur de l'ordre de 5 à 45 mm.

2. Dispositif guide-câbles selon la revendication 1, caractérisé en ce que la paroi intérieure du conduit de câbles présente entre des nervures de glissement voisines une forme de gorge concave par rapport au conduit de câbles qui se termine des deux côtés dans la crête des nervures de glissement.

3. Dispositif guide-câbles selon la revendication 1 ou 2, caractérisé en ce que l'angle d'orientation a se situe dans la plage comprise entre 45° et 340°, de préférence à environ 180°.

4. Dispositif guide-câbles selon l'une des revendications 1 à 3, caractérisé en ce que la largeur de contact b des nervures, le nombre z des nervures de glissement réparties régulièrement sur la circonférence de la paroi intérieure du conduit, le rayon intérieur r du tube, l'angle d'orientation a et la longueur $L_K$ des sections de contact des nervures entre les zones d'inversion satisfont à l'équation

$$Ar = 0,16\ b^2 z\ (0,0003\ r^2 a^2 + L_K{}^2)^{1/2}.$$

5. Dispositif guide-câbles selon l'une des revendications 1 à 4, caractérisé en ce qu'entre deux sections à angle d'orientation constant sont disposées des sections de raccordement de la longueur Lv dans lesquelles les nervures de glissement se prolongent parallèlement à l'axe du tube, et que la largeur de contact b des nervures, le nombre z des nervures de glissement réparties régulièrement sur la circonférence de la paroi intérieure du conduit, le rayon intérieur r du tube, l'angle d'orientation a, la longueur LK des sections de contact des nervures entre les zones d'inversion ainsi que la longueur $L_V$ des sections de raccordement satisfont à l'équation

$$Ar = 0,16\ b^2 z\ (0,0003\ r^2 a^2 + L_K{}^2)^{1/2} + 4L_V br.$$

6. Procédé d'introduction de câbles dans des tubes de câbles selon l'une des revendications 1 à 5, caractérisé en ce que la vitesse d'introduction du câble à introduire est choisie de telle façon que les surfaces de contact sont légèrement fondues par la chaleur de friction et que la matière en fusion crée un état de friction de lubrifiant.

Fig.1

Fig.2

*Fig.3*

EP 0 578 959 B1

EP 0 578 959 B1

# Fig.4

K

5

8

3

2

12

Fig. 5